# NOUVEAU FASCICULE DE BREVET EUROPEEN

(11) **EP 0 619 435 B2**
(45) Date de publication et mention de la décision concernant l'opposition: **11.09.2002**
(45) Mention de la délivrance du brevet: 28.08.1996
(21) Numéro de dépôt: 94400746.7
(22) Date de dépôt: 06.04.1994
(51) Int. Cl.: F16B 11/00, B32B 17/10, C03C 27/04

(54) **Fixation vissée d'un élément de retenue ou de fixation sur un vitrage feuilleté**
Schraubverbindung eines Halterungs- oder Befestigungselementes auf einer Verbundglasscheibe
Treaded connection of a retaining or fastening element on a laminated glass

(30) Priorité: 07.04.1993 DE 4311442
(43) Date de publication de la demande: 12.10.1994
(73) Titulaire: Saint-Gobain Glass France, 92400 Courbevoie (FR)
(72) Inventeur: Schilde, Heinz, D-5102 Würselen (DE); Triebs, Friedrich, D-5100 Aachen (DE); Krämling, Franz, D-5100 Aachen (DE)
(74) Mandataire: Le Vaguerèse, Sylvain Jacques

(56) Documents cités:
- EP-A- 0 340 089
- EP-A- 0 368 728
- EP-A- 0 533 566
- WO-A-94/02696
- DE-A- 2 509 357
- DE-A- 3 729 104
- US-A- 2 936 050
- Zeitschrift Glasforum 2/92

## Description

L'invention concerne un procédé pour fixer un élément de retenue ou de fixation sur un vitrage feuilleté à l'aide d'un assemblage vissé traversant ledit vitrage feuilleté (EP-A-0 533 566).

Les assemblages vissés sont habituellement utilisés pour les vitrages monolithiques. On effectue un ou plusieurs trous dans le vitrage et on applique deux parties de serrage sur les deux faces du vitrage qui, ainsi réunies ensemble par un assemblage vissé traversent le ou les trou(s). Ce type d'assemblage est source, dans beaucoup de cas, de problèmes pour les vitrages feuilletés. Sous l'influence des forces de serrage exercées par l'assemblage vissé, il peut en effet se produire un fluage, c'est-à-dire une déformation plastique de l'intercalaire thermoplastique du vitrage feuilleté dans l'environnement du trou. Ainsi l'épaisseur du vitrage feuilleté se rétrécit dans cette région, de telle sorte que l'assemblage vissé se desserre. Par conséquent, les vis, en se desserrant, peuvent entraîner un jeu supplémentaire de la fixation.

L'invention a pour but de mettre au point un assemblage vissé pour vitrages feuilletés qui exclue avec certitude le danger que représentent un desserrage et un détachement inopiné de l'assemblage vissé.

L'invention concerne un procédé pour fixer un élément de retenue ou un élément de fixation sur un vitrage feuilleté à l'aide d'un assemblage vissé traversant le vitrage feuilleté. Selon ce procédé, on pourvoit de trous (15, 16) au moins une première et une seconde feuilles de verre (2, 3) constituant le vitrage feuilleté (1) avant qu'elles soient assemblées avec l'intercalaire thermoplastique (4) de telle façon que les trous soient excentriques l'un par rapport à l'autre après la fabrication du vitrage feuilleté, on insère un manchon de centrage (18) dans le trou (15) de la première feuille de verre (2) ci-dessus et on rempli d'une colle durcissable (20) l'espace situé à l'intérieur de la paroi du trou (16) de la seconde feuille de verre (3), puis on visse l'assemblage.

En remplissant d'une colle durcissable l'espace vide qui sépare les parties de l'assemblage vissé traversant les trous et les parois de ceux-ci, on crée entre les surfaces de serrage de l'assemblage vissé une butée Incompressible qui. après durcissement absorbe les forces de serrage et empêche la déformation plastique de l'intercalaire thermoplastique, par exemple lors d'un réchauffement produit par le rayonnement solaire En outre la disposition excentrique des trous l'un par rapport à l'autre exclue toute possibilité de distorsion de cette butée à l'intérieur des trous. Comme disposition excentrique, l'un des trous peut. par exemple, avoir un diamètre supérieur à l'autre.

Etant donné que la colle employée pour la fabrication de la butée assure un collage suffisant avec le matériau de l'assemblage vissé la vis filetée ainsi que la partie complémentaire de l'assemblage vissé coopérant avec celle-ci, sont de cette manière également assurés de ne pas se desserrer. La colle utilisée peut être une colle plastique durcissable. Il s'agit, par exemple d'une colle monocomposant ou d'une colle époxy à deux composants.

Selon le procédé de l'invention, l'assemblage vissé requiert un couple de serrage relativement faible, de l'ordre de quelque 0,5 Nm.

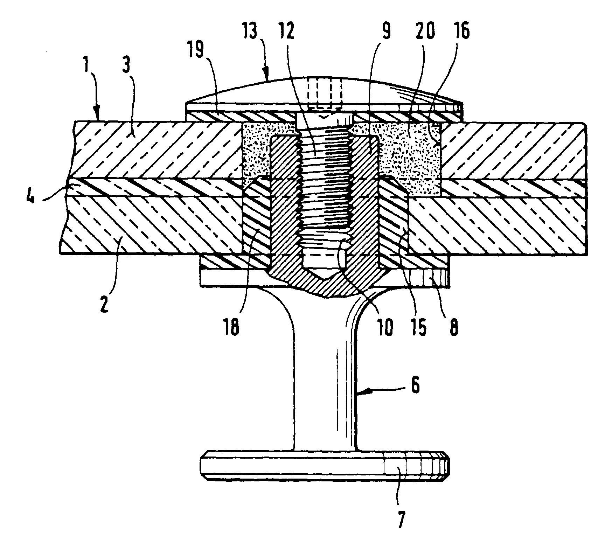

Le procédé selon l'invention s'est révélé particulièrement efficace par exemple pour la fixation durable de broches de guidage sur les vitrages latéraux coulissants d'automobiles. C'est la raison pour laquelle la description suivante d'un exemple de réalisation à l'aide de la figure est relative à la fixation d'une telle broche de guidage sur un vitrage latéral feuilleté.

Le vitrage feuilleté 1 est constitué de deux feuilles de verre 2 et 3 qui sont assemblées avec un intercalaire thermoplastique 4, par exemple une feuille de PVB de 0.76 mm d'épaisseur en utilisant chaleur et pression. Pour le vitrage feuilleté 1 il s'agit, en particulier, d'un vitrage latéral bombé qui coulisse verticalement dans une portière et qui est guidé par l'intermédiaire d'une ou plusieurs broches 6 métalliques solidement montées sur le vitrage feuilleté dans des rails disposés à peu près verticalement le long du cadre du vitrage. Pour des raisons de simplicité le guide-rail, avec lequel fonctionne la broche de guidage 6, n'est pas représenté sur la figure.

La broche de guidage 6 englobe la véritable section 7. une surface d'appui circulaire 8 ainsi qu'une section cylindrique creuse 9 qui est pourvue d'un filetage central 10 et qui pénètre dans le trou du vitrage feuilleté. Le filetage 12 d'une vis à tête bombée 13 est vissé avec la section cylindrique creuse 9.

La feuille de verre 2 du vitrage feuilleté est pourvue. à l'endroit où est disposée la broche de guidage 6. d'un trou 15 et la feuille de verre 3 d'un trou 16. Le diamètre du trou 16 est. dans le cas représenté, plus grand que celui du trou 15 : par exemple. le diamètre du trou 15 peut être de 10 mm et celui du trou 16 de 12 mm.

Les trous 15 et 16 sont disposés avec un léger décalage latéral, de telle façon qu'ils soient excentriques l'un par rapport à l'autre lorsque le vitrage feuilleté est fabriqué.

Entre la partie d'appui 8 et la partie cylindrique creuse 9 de la broche de guidage 6. d'une part. et la feuille de verre 2 dans la région du trou 15. d'autre part. est inséré un manchon de centrage 18 en polymère alors qu'entre la tête bombée de la vis fraisée 13 et la surface de la feuille de verre 3 est insérée une plaque de verre 19 également en polymère approprié.

Pour fixer la broche de guidage 6. on déplace le manchon de centrage 18 sur la section cylindrique creuse 9 de la broche de guidage 6 et la section cylindrique creuse 9 ainsi pourvue du manchon de centrage 18 est insérée dans le trou 15. Ensuite l'espace situé à l'intérieur de la paroi du trou 16 est rempli de colle durcissable Puis la vis 13 est vissée dans le filetage 10. avec un couple de serrage relativement faible de quelque 0.5 Nm. On laisse ensuite la colle durcir.

On emploie dans ce but. par exemple, une colle époxy à deux ou à un composant d'un système thermodurcissable. La colle durcit pour former un duroplaste et, après durcissement, elle forme un corps intercalaire solide dans la région du trou 16.

Le document WO 94/026 96 décrit un vitrage feuilleté dont deux feuilles de verre constitutives sont munies de trous excentriques remplis tous deux de résine.

## Revendications

1. Procédé pour fixer un élément de retenue ou un élément de fixation sur un vitrage feuilleté à l'aide d'un assemblage vissé traversant le vitrage feuilleté, **caractérisé en ce qu'**au moins une première et une seconde feuilles de verre (2), (3) qui constituent le vitrage feuilleté (1), avant d'être assemblées avec l'intercalaire thermoplastique (4), sont chacune pourvues d'un trou (15), respectivement (16), de telle façon que ceux-ci soient excentriques l'un par rapport à l'autre après la fabrication du vitrage feuilleté (1), **en ce qu'**un manchon de centrage (18) est inséré dans le trou (15) de la première feuille de verre (2), **en ce que** l'espace situé à l'intérieur de la paroi du trou (16) de la seconde feuille de verre (3) est ensuite rempli de colle durcissable (20), puis **en ce que** l'assemblage est vissé.

2. Procédé selon la revendication 1, **caractérisé en ce que** la seconde feuille de verre (3) est pourvue d'un trou (16) ayant un diamètre plus grand que celui de la première feuille de verre (2).

3. Procédé selon la revendication 1 ou 2, **caractérisé en ce que** l'on utilise une colle plastique durcissable époxy à deux composants.

4. Procédé selon la revendication 1 ou 2, **caractérisé en ce que** l'on utilise une colle plastique durcissable à un composant.

5. Procédé selon l'une des revendications 1 à 4, **caractérisé en ce que** l'assemblage vissé requiert un couple de serrage relativement faible, de quelque 0,5 Nm.

6. Application du procédé selon l'une des revendications 1 à 5 pour fixer une broche de guidage (6) d'un vitrage latéral coulissant en verre feuilleté pour automobiles.

## Claims

1. Method for fixing a retaining or a fixing element to a laminated glazing with the aid of a screwed assembly traversing the laminated glazing, **characterized in that** at least one first and one second glass sheets (2, 3) constituting the laminated glazing (1), prior to being assembled with the thermoplastic spacer (4), are each provided with a hole (15) respectively (16), so that they are eccentric to one another following the manufacture of the laminated glazing (1), **in that** a centring sleeve (8) is inserted in the hole (15) of the first glass sheet (2), **in that** the space within the wall of the hole (16) of the second glass sheet (3) is then filled with hardenable adhesive (20) and then **in that** the assembly is screwed.

2. Method according to claim 1, **characterized in that** the second glass sheet (3) is provided with a hole (16) having a diameter larger than that of the first glass sheet (2).

3. Method according to claim 1 or 2, **characterized in that** use is made of a two-component, hardenable, epoxy plastic adhesive.

4. Method according to claim 1 or 2, **characterized in that** use is made of a one-component, hardenable plastic adhesive.

5. Method according to one of the claims 1 to 4, **characterized in that** the screwed assembly requires a relatively low tightening torque of about 0.5 Nm.

6. Application of the method according to any one of the claims 1 to 5 for the fixing of a guide pin (6) of a sliding, laminated glass, side window for cars.

## Patentansprüche

1. Verfahren zum Befestigen eines Halte- oder Befestigungselements an einer Verbundglasscheibe mit Hilfe einer die Verbundglasscheibe durchdringenden Schraubverbindung, **dadurch gekennzeichnet, dass** mindestens eine erste und eine zweite Glasscheibe (2, 3), die die Verbundglasscheibe (1) bilden, vor dem Verbinden mit der thermoplastischen Zwischenschicht (4) derart einzeln mit Bohrungen (15 bzw. 16) versehen werden, dass diese nach dem Herstellen der Verbundglasscheibe (1) exzentrisch zueinander liegen, dass eine Zentrierhülse (18) in die Bohrung der ersten Glasscheibe (2) eingesetzt wird, dass der im Inneren der Wand der Bohrung (16) der zweiten Glasscheibe befindliche Hohlraum mit einer aushärtenden duroplastischen Klebermasse (20) ausgefüllt wird und dass dann die Schraubverbindung verschraubt wird.

2. Verfahren nach Anspruch 1, **dadurch gekennzeichnet, dass** die zweite Glasscheibe (3) mit einer Lochbohrung (16) mit einem größeren Durchmesser versehen wird als diejenige der ersten Glasscheibe (2).

3. Verfahren nach Anspruch 1 oder 2, **dadurch gekennzeichnet, dass** ein aushärtender plastischer Zweikomponenten-Epoxid-Kleber verwendet wird.

4. Verfahren nach Anspruch 1 oder 2, **dadurch gekennzeichnet, dass** ein aushärtender plastischer Einkomponenten-Kleber verwendet wird.

5. Verfahren nach einem der Ansprüche 1 bis 4, **dadurch gekennzeichnet, dass** die Schraubverbindung mit einem geringen Anzugsmoment von etwa 0,5 Nm verschraubt wird.

6. Anwendung des Verfahrens nach einem der Ansprüche 1 bis 5 zum Befestigen eines Führungsbolzens (6) einer verschiebbaren Fensterscheibe aus Verbundglas für Kraftfahrzeuge.
